# EUROPEAN PATENT SPECIFICATION

(11) **EP 0 970 833 B1**
(45) Date of publication and mention of the grant of the patent: **13.11.2002**
(21) Application number: 99830430.7
(22) Date of filing: 05.07.1999
(51) Int. Cl.: B60H 1/00, F28F 9/00, B60K 11/04

(54) **Heat exchanger module for vehicles**
Wärmetauschermodul für Fahrzeuge
Echangeur de chaleur modulaire pour véhicules

(30) Priority: 10.07.1998 IT TO980612
(43) Date of publication of application: 12.01.2000
(73) Proprietor: DENSO THERMAL SYSTEMS S.p.A., 10046 Poirino (Torino) (IT)
(72) Inventor: Lazzaro, Maurizio, 10078 Venaria Reale, Torino (IT); Polosa, Giovanni, Chieri, Torino (IT)
(74) Representative: Marchitelli, Mauro

(56) References cited:
- EP-A- 0 494 353
- FR-A- 2 189 697
- US-A- 5 219 016
- US-A- 5 560 425
- US-A- 5 671 803

## Description

The present invention relates to a heat exchanger module for vehicles, of the type comprising:
- a condenser heaving a pair of parallel tubular distributors,
- a support structure carrying at least one electric fan, and
- a radiator placed between the support structure and the condenser,
wherein the condenser, the support structure and the radiator are fixed to each other so as to form a pre-assembled unit and the condenser is fixed to the support structure by means of flanges which are part of the support structure.

In known heat exchanger modules of this type the condenser is usually fixed to the radiator by means of brackets and screws. A solution is also known wherein the condenser is fixed to the radiator by snap-engaging two projections formed at the ends of the distributors into respective seats formed in the header tanks of the radiator.

A heat exchanger module according to the preamble of claim 1 is disclosed in the US-A-5,671,803, wherin a heat exchanger module for vehicles comprises a condenser directly fixed to the support structure by means of flanges which are integrally formed with the support structure and engage the end portions of the distributor.

The object of the present invention is to provide an improved heat exchanger module which reduces the costs due to assembling the condenser on the module and which simplifies the structural elements necessary for carrying out such assembly.

According to the present invention, this object is achieved by a heat exchanger module of the type defined at the beginning of the description, characterized in that at least one of said flanges has an engagement seat open on one side and closure means are provided for closing said seat after having inserted the corresponding end of the distributor.

This new system for fixing the condenser eliminates brackets and fixing screws and simplifies the so called shoulders of the condenser since it is no more necessary to form thereon the surfaces for fixing connecting brackets. The system according to the invention eliminates the need for seats formed on the header tanks of the radiator, thereby simplifying moulding of the tanks.

Further characteristics and advantages of the present invention will become clear in the course of the detailed description which follows, given purely by way of non-limiting example, in which:
- figure 1 is a perspective view of a heat exchanger module according to the present invention,
- figure 2 is a perspective view from the direction indicated by the arrow II in figure 1,
- figures 3 and 4 are perspective views showing in a greater scale the details indicated by the arrows III and IV in figures 1 and 2,
- figure 5 is a partial perspective view showing the end of a distributor of the condenser, and
- figure 6 is a perspective view similar to figure 3, showing a variant of the present invention.

Referring to the drawings, 10 indicates a condenser for an air conditioning system for vehicles, including in a way per se known, a pair of tubular distributors 12 between which is placed a heat exchanger core 13 formed by tubes and fins.

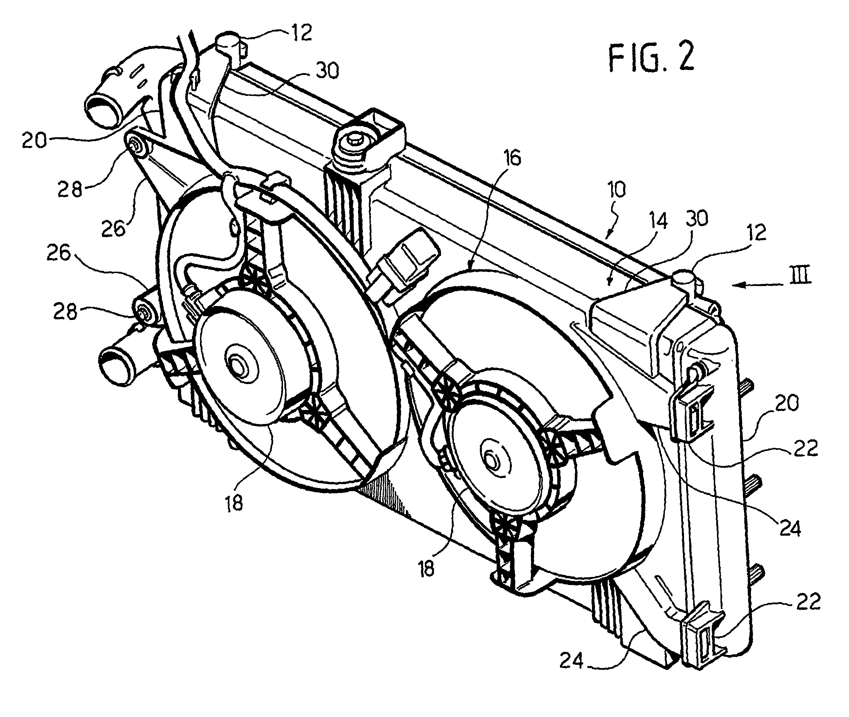

The condenser 10 is inserted in a heat exchanger module comprising, in addition to the condenser 10, a radiator 14 for cooling the vehicle internal combustion engine and a support structure 16 to which the radiator 14 and the condenser 10 are fixed. The support structure 16 is formed by an injection moulded monolithic body of plastics material, carrying at least one electric fan assembly 18 (in the example shown in figure 2 there are two electric fan assemblies).

The heat exchanger module including the support structure 16, the radiator 14 and the condenser 10 is a preassembled assembly which is fixed in a way per se known to the front section of a vehicle.

The radiator 14 and the condenser 10 are both directly fixed to the support structure 16.

The radiator 14 is fixed to the support structure 16 as disclosed in detail in a contemporary patent application of the same applicant. As shown in figure 2, the radiator 14 has two header tanks of plastics material 20 a first of which has two integral seats 22 in which are inserted the ends of a pair of arms 24 integrally formed with the support structure 16. In correspondence with the other header tank 20 of the radiator 14, the support structure 16 has a second pair of arms 26 whose ends are fixed to the radiator 14 by screws 28.

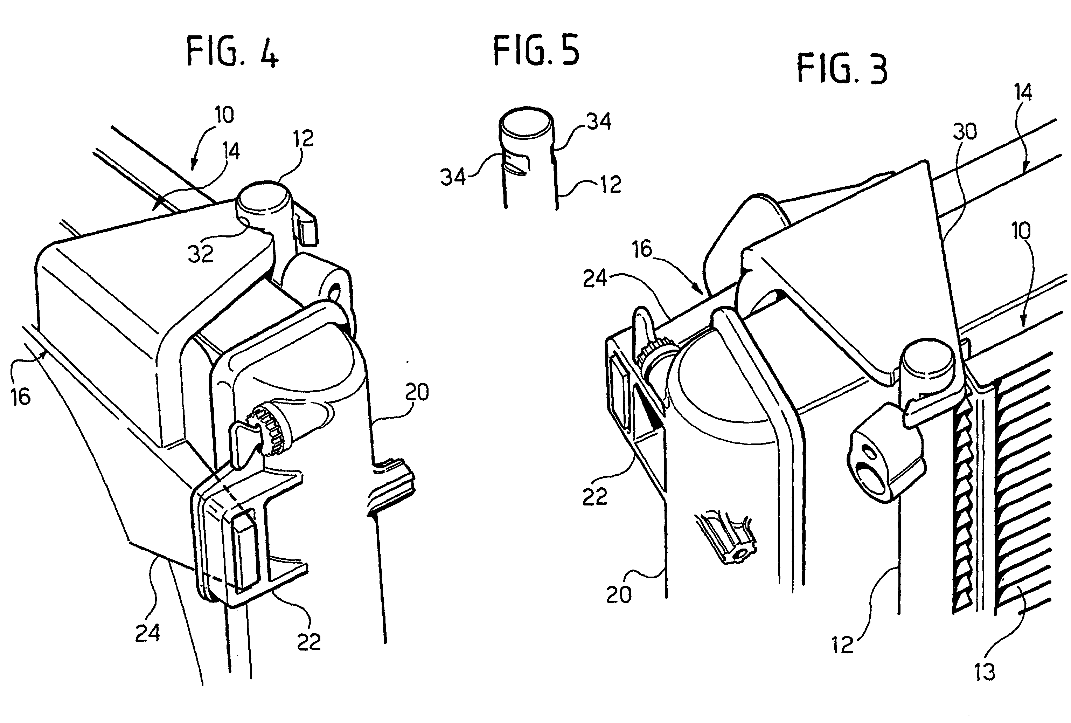

The condenser 10 is fixed to the support structure 16 by means of two pairs of flanges 30 (only one of which is visible in figure 2) integrally formed with the structure 16. The flanges 30 are integrally formed during the moulding of the support structure 16 and do not increase considerably the total production cost of this structure. The flanges 30 extend over the radiator 14, in a direction orthogonal to the condenser 10. As shown in greater detail in figures 3 and 4, at the end of each flange 30 is formed a partially open seat 32 in which is snap engaged a corresponding end portion of the distributor 12. As shown in figure 5, the end portion of each distributor 12 has two opposite flattened portions, indicated 34, formed by permanent deformation and having the purpose of improving the engagement conditions with the seat 32. The height of the flattened portions 34 is substantially equal to the thickness of the flanges 30, so that the distributors are restrained into the seats 22 both in the direction of their longitudinal axes and along any direction orthogonal to their longitudinal axes.

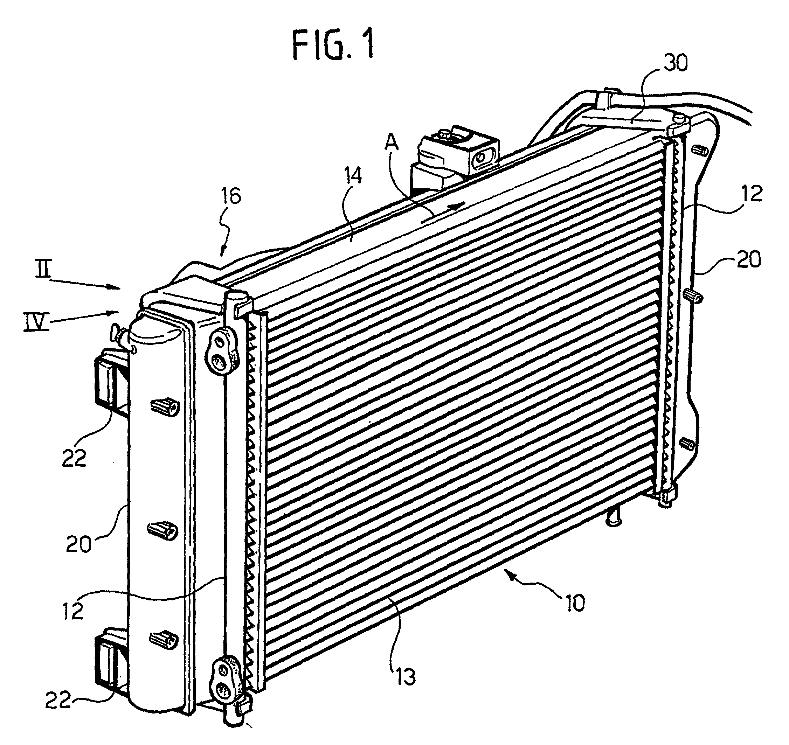

The condenser 10 is mounted on the support structure 16 by a simple movement in the direction indicated by arrow A in figure 1, so as to bring at the same time the four end portions of the distributors 14 into engagement with the respective seats 32 of the flanges 30. For removing the condenser 10 from the heat exchanger module, it is sufficient to pull the condenser in the direction opposite to the one indicated by arrow A.

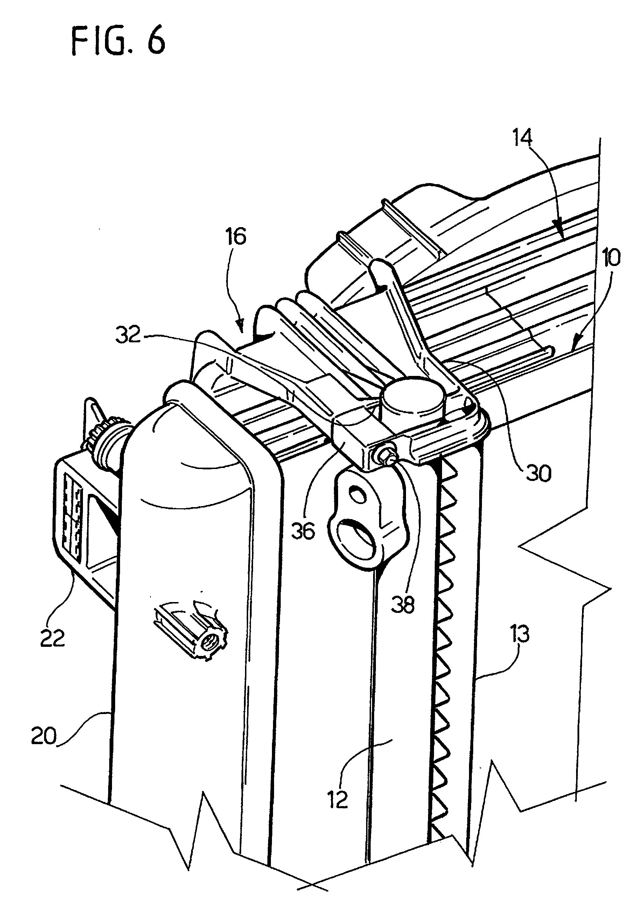

Figure 6 shows a variant in which the elements corresponding to the ones previously disclosed are indicated by the same numeral references. In the variant of figure 6 closure means are provided for closing the open side of at least one engagement seat 32. In the shown example such closure means comprise a spacer element 36 which is fixed to the flange 30 by means of a screw 38 after having inserted the end of the distributor into the seat 32.

## Claims

1. Heat exchanger module for vehicles, comprising:
- a condenser (10) having a pair of parallel tubular distributors (12),
- a support structure (16) carrying at least one electric fan (18), and
- a radiator (14) placed between the support structure (16) and the condenser (10),
wherein the condenser (10), the support structure (16) and the radiator (14) are fixed to each other so as to form a preassembled unit and the condenser (10) is directly fixed to the support structure (16) by means of at least one pair of flanges (30) which are integrally formed with the support structure (16) and which engage end portions of the distributors (12),
**characterized in that** at least one of said flanges (30) has an engagement seat (32) open on one side, closure means (36, 38) being provided for closing said seat (32) after having inserted the corresponding end of the distributor (12).

2. Heat exchanger module according to claim 1, **characterized in that** said closure means comprise a spacer element (36) fixed to the flange (30) by a screw (38).

3. Heat exchanger module according to claim 1, **characterized in that** said flanges (30) project in a direction orthogonal to the condenser (10) and extend over the radiator (14).

4. Heat exchanger module according to claim 1, **characterized in that** the end portions of the distributors (12) have flattened portions (34) which snap engage into respective partially open seats (32) formed at the ends of the flanges (30).

## Patentansprüche

1. Wärmetauschermodul für Fahrzeuge, umfassend:
- einen Kondensator (10) mit einem Paar paralleler rohrförmiger Verteiler (12),
- eine Tragstruktur (16), die zumindest einen elektrischen Lüfter (18) trägt, und
- einen Radiator (14), der zwischen der Tragstruktur (16) und dem Kondensator (10) angeordnet ist,
wobei der Kondensator (10), die Tragstruktur (16) und der Radiator (14) aneinander befestigt sind, so dass sie eine vormontierte Einheit bilden und der Kondensator (10) mittels wenigstens einem Paar von Flanschen (30), die einstückig mit der Tragstruktur (16) ausgebildet sind und an Endabschnitten der Verteiler (12) angreifen, direkt an der Tragstruktur (16) befestigt ist,
**dadurch gekennzeichnet, dass**
wenigstens einer der Flansche (30) einen auf einer Seite offenen Rastsitz (32) aufweist und Verschlussmittel (36, 38) zum Verschließen des Sitzes (32) nach Einsetzen des entsprechenden Endes des Verteilers (12) vorgesehen sind.

2. Wärmetauschermodul gemäß Anspruch 1, **dadurch gekennzeichnet, dass** die Verschlussmittel ein Abstandshalterelement (36) aufweisen, das durch eine Schraube (38) an dem Flansch (30) befestigt ist.

3. Wärmetauschermodul gemäß Anspruch 1, **dadurch gekennzeichnet, dass** die Flansche (30) in orthogonaler Richtung zu dem Kondensator (10) vorstehen und sich über den Radiator (14) erstrecken.

4. Wärmetauschermodul gemäß Anspruch 1, **dadurch gekennzeichnet, dass** die Endabschnitte der Verteiler (12) abgeflachte Abschnitte aufweisen, die in jeweilige teilweise offene Sitze (32) einrasten, die an den Enden der Flansche (30) ausgebildet sind.

## Revendications

1. Module d'échangeur de chaleur pour véhicules, comprenant :
un condenseur (10) possédant une paire de distributeurs tubulaires parallèles (12),
une structure de support (16) qui porte au moins un ventilateur électrique (18), et
un radiateur (14) placé entre la structure de support (16) et le condenseur (10),
dans lequel le condenseur (10), la structure de support (16) et le radiateur (14) sont fixés mutuellement pour former une unité préalablement assemblée et le condenseur (10) est directement fixé à la structure de support (16) par au moins une paire de flasques (30) qui sont formés en une seule pièce avec la structure de support (16) et qui coopèrent avec des parties d'extrémité des distributeurs (12),
**caractérise en ce que** l'un au moins des flasques (30) possède un siège de coopération (32) ouvert d'un premier côté, un dispositif de fermeture (36, 38) étant destiné à fermer le siège (32) après l'insertion de l'extrémité correspondante du distributeur (12).

2. Module d'échangeur de chaleur Belon la revendication 1, **caractérisé en ce que** le dispositif de fermeture comporte un élément d'entretoise (36) fixé au flasque (30) par une vis (38).

3. Module d'échangeur de chaleur selon la revendication 1, **caractérisé en ce que** les flasques (30) dépassent en direction perpendiculaire au condenseur (10) et s'étendent au-dessus du radiateur (14).

4. Module d'échangeur de chaleur selon la revendication 1, **caractérisé en ce que** les parties d'extrémité des distributeurs (12) ont des parties aplaties (34) qui coopèrent élastiquement avec des sièges partiellement ouverts respectifs (32) formés aux extrémités des flasques (30).
